# DEMANDE DE BREVET EUROPEEN

(11) **EP 0 877 522 A1**
(43) Date de publication de la demande: **11.11.1998**
(21) Numéro de dépôt: 98410050.3
(22) Date de dépôt: 06.05.1998
(51) Int. Cl.: H04M 11/06, H04L 27/00, H03M 3/02

(54) **Interface d'isolement entre une ligne téléphonique et un circuit numérique**

(30) Priorité: 07.05.1997 FR 9705868
(71) Demandeur: SGS-THOMSON MICROELECTRONICS S.A., 94250 Gentilly (FR)
(72) Inventeur: Dabin, Emmanuel, 38500 Coublevie (FR); Defretin, Bruno, 38330 Saint Ismier (FR)
(74) Mandataire: de Beaumont, Michel

(57) **Abrégé**

L'invention concerne un procédé et un dispositif d'isolement galvanique entre une ligne téléphonique (LINE) et un équipement utilisateur, traitant des signaux numériques et alimenté indépendamment de la ligne, qui consistent à réaliser l'isolement galvanique (20') sur les signaux numériques.

## Description

La présente invention concerne le domaine des circuits générant des signaux numériques et devant être raccordés à une ligne téléphonique. Il s'agit, par exemple, d'un système de traitement numérique de type micro-ordinateur devant être raccordé, par l'intermédiaire d'un modem, à une ligne téléphonique.

Les lignes téléphoniques ont besoin d'être isolées des lignes électriques car leurs masses respectives ne sont pas au même potentiel.

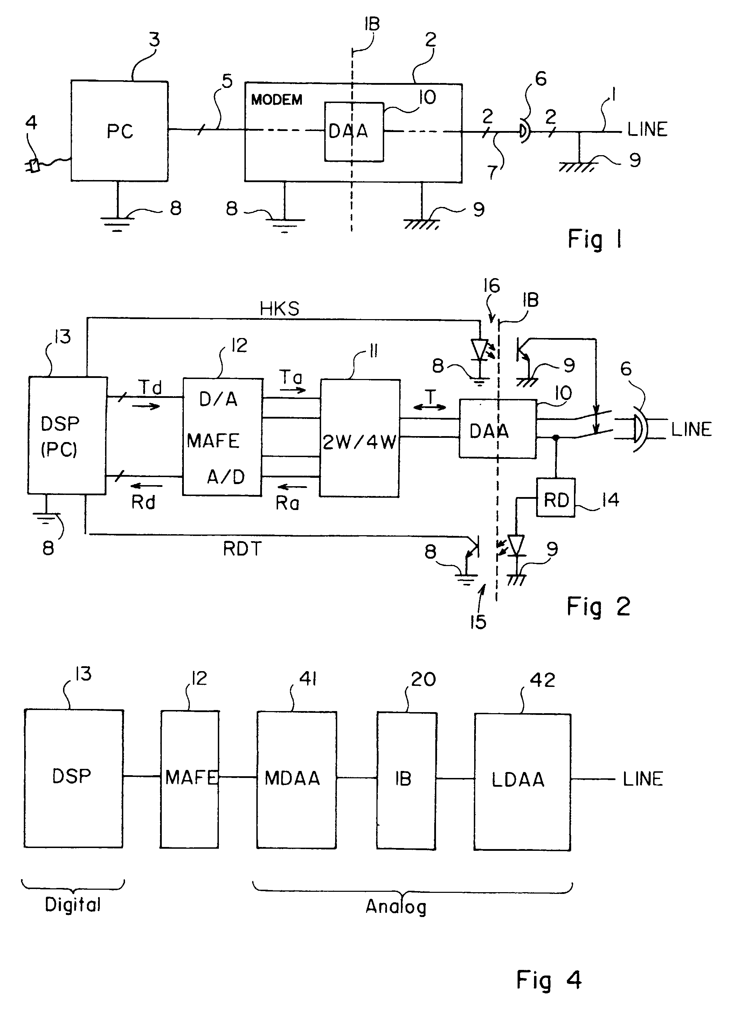

La figure 1 représente, de façon très schématique, un exemple d'équipement raccordé à une ligne téléphonique 1 au moyen d'un modem 2. Dans cet exemple, l'équipement est constitué d'un micro-ordinateur 3 (PC). Le micro-ordinateur 3 est alimenté par le secteur au moyen d'une prise 4 et comporte une liaison 5 numérique de communication avec le modem 2. Le modem 2 est raccordé à la ligne téléphonique 1 par l'intermédiaire d'une prise 6 de connexion d'une liaison bifilaire 7 analogique connectée au modem 2. Le modem 2 a pour rôle de convertir les signaux numériques émis par le micro-ordinateur 3 en signaux analogiques pouvant être transmis sur la ligne 1 et de convertir les signaux analogiques reçus sur la ligne 1 en signaux numériques à destination du micro-ordinateur 3.

Dans ce type d'application, l'équipement utilisateur, ici le micro-ordinateur 3, est référencé à un premier potentiel de masse 8 (par exemple, la terre) qui est différent d'un deuxième potentiel de masse 9 auquel est référencée la ligne 1 depuis le central téléphonique. Cette différence entre les potentiels de référence interdit toute connexion directe entre la ligne téléphonique et la ligne d'alimentation secteur. Pour cette raison et pour les raisons mentionnées précédemment, il est donc nécessaire de prévoir une barrière (ligne en pointillés IB) d'isolement galvanique entre la ligne téléphonique et l'équipement utilisateur. Une telle barrière d'isolement est généralement prévue au sein d'un circuit 10 (DAA) d'organisation des accès à la ligne 1, contenu dans le modem 2.

La figure 2 illustre la structure d'un modem classique. Le circuit 10 d'organisation des accès produit un signal analogique T, isolé de la ligne téléphonique et contenant à la fois les informations transmises Ta et les informations reçues Ra. Un convertisseur 11 (2W/4W), réalisé généralement sous forme de composants intégrés discrets, sépare les signaux entrants des signaux sortants, et fournit le signal différentiel analogique Ra et reçoit le signal différentiel analogique Ta. Un circuit 12, généralement appelé tête analogique de modem (MAFE), comprend un convertisseur numérique-analogique pour convertir des données Td devant être transmises en des signaux analogiques Ta adaptés à une transmission sur la ligne téléphonique. Le circuit 12 contient également un convertisseur analogique-numérique pour convertir les signaux analogiques Ra en données numériques Rd. Les signaux numériques Td, Rd sont des signaux sur plusieurs bits adaptés à un processeur de signal numérique 13 (DSP) de l'équipement utilisateur, par exemple, un micro-ordinateur.

Dans certaines applications, d'autres fonctions que celles de transmission et de réception de données ont besoin d'être disponibles. Par exemple, le modem comporte un détecteur 14 (RD) de sonnerie qui détecte, sur la ligne, la présence d'une tension alternative de plusieurs dizaines de volts et ayant une fréquence comprise entre 20 et 60 Hz. Ce détecteur sert à informer le modem d'un appel entrant. Suite à la détection de cet appel, l'équipement doit se connecter. Généralement, un commutateur K est nécessaire pour fermer la ligne. Bien entendu, ces fonctions additionnelles ont également besoin d'être isolées de la ligne téléphonique pour ce qui concerne les signaux (RDT, HKS) à destination ou provenant du circuit numérique 13.

La barrière d'isolement, la plus répandue dans les circuits DAA pour l'isolation entre une ligne téléphonique et un équipement utilisateur, est constituée d'un transformateur. Un tel transformateur se retrouve en pratique dans la quasi-totalité des modems et de tout autre équipement connecté à une ligne téléphonique et dont une partie est alimentée par le secteur. Le recours au transformateur est lié au caractère bidirectionnel du transfert de signaux et au très bon isolement qu'il réalise.

L'inconvénient majeur du transformateur est sa taille. Si ce problème de taille est moins sensible dans le cas des télécopieurs ou des modems externes pour micro-ordinateur, il devient critique dans le cas de modems destinés à être intégrés dans des micro-ordinateurs portables ou des ordinateurs de poche. En particulier, les normes de dimensions des cartes, dites PCMCIA, ne permettent pas l'emploi d'un transformateur d'isolement.

Un autre composant d'isolement connu consiste en un optocoupleur dans lequel une diode émettrice et un optotransistor sont intégrés en liaison optique l'un avec l'autre. De tels optocoupleurs ont l'inconvénient d'être non-linéaires ce qui rend leur utilisation impossible pour l'isolement de signaux analogiques, donc pour remplacer le transformateur d'isolement des données. Par contre, quand un transfert bidirectionnel n'est pas nécessaire, comme dans le cas des fonctions supplémentaires de détection de sonnerie et de prise de ligne, on peut utiliser des optocoupleurs 15, 16. Le brevet américain N° 5 481 606 propose d'améliorer la linéarité d'un optocoupleur en utilisant un optotransistor supplémentaire pour fournir un signal de contre-réaction. Si une telle solution améliore la linéarité, elle augmente considérablement le coût de l'optocoupleur.

L'avantage du recours à des optocoupleurs est que tout en fournissant un bon isolement électrique, on réduit considérablement l'encombrement par rapport à un transformateur.

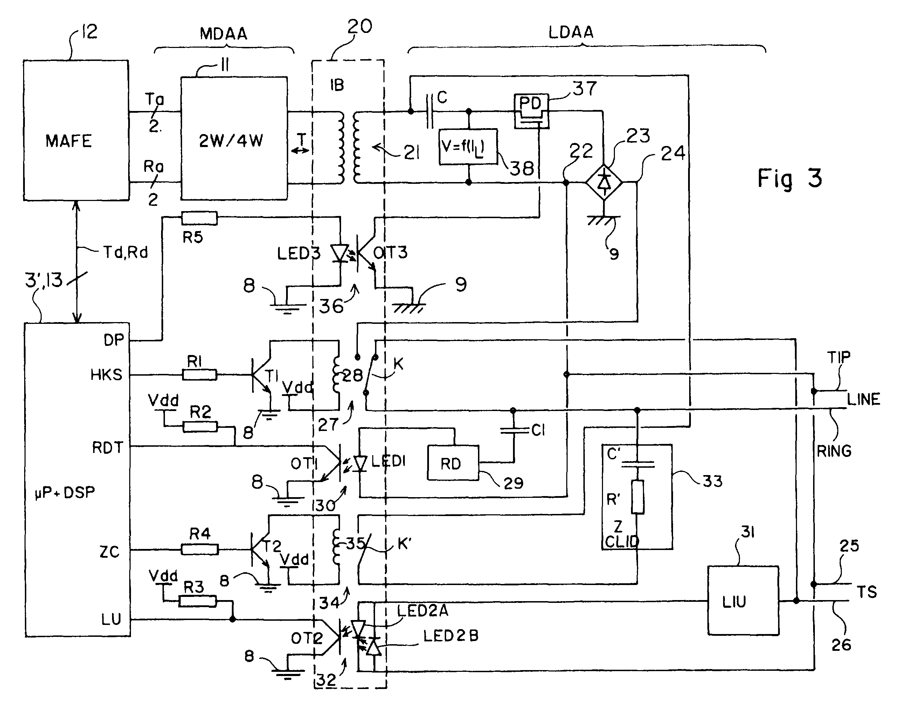

La figure 3 représente un exemple classique de circuit d'organisation des accès correspondant au concept le plus fréquemment utilisé aujourd'hui. La barrière d'isolement 20 comprend un transformateur d'isolement 21 dont le rôle est d'assurer le transfert du signal T de données analogiques entre le circuit 11 et la ligne téléphonique. Les deux extrémités d'un enroulement (secondaire) du transformateur 21 sont reliées au duplexeur 11. Une première extrémité d'un enroulement (primaire) du transformateur 21 est reliée à un premier conducteur, désigné par TIP, de la ligne téléphonique (LINE) et à une première borne 22 d'entrée alternative d'un pont redresseur 23. Une deuxième borne 24 d'entrée alternative du pont redresseur 23 est reliée, par l'intermédiaire d'un commutateur K de prise de ligne, à un deuxième conducteur, désigné par RING, de la ligne. Le commutateur K constitue ici un sélecteur d'attribution de la ligne entre le modem et un poste téléphonique TS. Une première borne 25 du poste téléphonique est directement reliée au conducteur TIP tandis qu'une deuxième borne 26 est reliée, par l'intermédiaire du commutateur K au conducteur RING. Le sélecteur K doit pouvoir être commandé par le microprocesseur 3' et le signal HKS de commande de prise de ligne par le modem doit être isolé de la ligne. Comme le sélecteur K réalise ici une fonction d'aiguillage, on a généralement recours à un relais 27 pour réaliser l'isolement. Par exemple, une première extrémité de la bobine 28 du relais est reliée à une borne d'application d'une tension positive Vdd. Le passage du courant dans la bobine 28 est commandé par un transistor T1 recevant sur sa base, le signal à deux états HKS par l'intermédiaire d'une résistance R1.

Le conducteur RING est relié, par l'intermédiaire d'un condensateur Cl, à un circuit 29 de détection de sonnerie (RD). Une sortie du circuit 29 est reliée, par l'intermédiaire d'une diode émettrice LED1 d'un optocoupleur 30, au conducteur TIP. Côté équipement utilisateur, un optotransistor OT1 du coupleur 30 est rendu conducteur en présence d'un signal de sonnerie. Par exemple, l'émetteur du transistor OT1 est relié à la masse 8 et son collecteur est relié à une borne RDT du microprocesseur 3 et, par l'intermédiaire d'une résistante R2 à la tension Vdd. En l'absence de signal de sonnerie, le signal RDT est à l'état haut tandis qu'en présence d'un signal de sonnerie, ce signal est à l'état bas. Le détecteur de sonnerie sert à avertir (réveiller) le modem de la réception d'un appel.

Pour permettre le partage de la ligne entre le poste téléphonique TS et le modem, le microprocesseur 3 doit savoir quand le poste téléphonique TS occupe la ligne. Pour ce faire, la borne 26 du poste TS est reliée à une borne d'entrée d'un circuit 31 (LIU) de détection de l'utilisation de la ligne. Une sortie du circuit 31 est reliée, par l'intermédiaire de diodes émettrices LED2A et LED2B d'un optocoupleur 32, à la borne 25 du poste téléphonique. Côté équipement utilisateur, un optotransistor OT2 du coupleur 32, sensible aux deux polarités possibles d'une ligne téléphonique, est rendu conducteur par l'émission lumineuse de la diode LED2A ou LED2B (selon la polarité de la ligne) quand le poste téléphonique est décroché. Le transistor 0T2 est, par exemple, associé à une résistance R3 pour constituer un montage similaire à celui décrit précédemment pour la détection de sonnerie. Le collecteur de l'optotransistor OT2 est relié à une borne LU du microprocesseur 3.

Un circuit 33, composé d'un réseau R'C' (ZCLID) et réutilisant le transformateur 21, sert à identifier l'appelant (nom et numéro) entre deux transmissions de signal de sonnerie. Cette identification est effectuée avant la prise de ligne. Une borne d'entrée du circuit 33 est reliée au conducteur RING. Une borne de sortie du circuit 33 est reliée, par l'intermédiaire d'un commutateur K', à la deuxième extrémité de l'enroulement primaire du transformateur 21. Le circuit 33 est généralement constitué d'un condensateur C' monté en série avec une résistance R'. Le rôle du condensateur C' est ici d'éliminer la composante continue du signal analogique de la ligne. Le commutateur K' fait partie d'un relais 34 dont une bobine 35 est commandée par un montage (transistor T2 et résistance R4) similaire au montage exposé en relation avec le relais 27. La fermeture du commutateur K' est commandée par le microprocesseur 3' depuis une borne ZC délivrant un signal à deux états. Une fois le circuit établi, les coordonnées de l'appelant sont transmises, par l'intermédiaire du transformateur 21, au circuit 11.

Dans le cas d'une numérotation décimale, le microprocesseur 3' délivre un signal DP de numérotation qui transite par un optocoupleur 36 pour commander un numéroteur 37 (PD). Le signal DP, constitué d'un train d'impulsions, est envoyé, par l'intermédiaire d'une résistance R5, sur une diode émettrice LED3 du coupleur 36. Côté ligne, un optotransistor OT3 commande le circuit 37. Le circuit 37 est, par exemple, constitué d'un commutateur intercalé entre une borne de sortie positive du pont 23 et la deuxième extrémité de l'enroulement primaire du transformateur 21. Un condensateur C est intercalé entre le circuit 37 et l'extrémité de cet enroulement primaire.

Un circuit (U = f(I_{L})) crée, entre la borne 22 et le point milieu de la connexion entre le condensateur C et le circuit 37, une tension continue U, proportionnelle au courant de ligne I_{L}. Cette tension U doit être inférieure à une valeur maximum afin d'établir correctement la communication. Le condensateur C isole la composante continue (I_{L}) du signal analogique transmis sur la ligne téléphonique.

En cas d'appel provenant de l'extérieur, les fonctions mises en oeuvre sont : la détection de sonnerie, l'identification de l'appelant, la prise de ligne et le dialogue (échange de données) à travers le transformateur 21. En cas d'appel émis par le modem, les fonctions mises en oeuvre sont : la détection d'occupation, la prise de ligne, la numérotation et la commucation.

Un inconvénient des systèmes connus est que les fonctions d'isolement sont le plus souvent individualisées. Cela augmente le coût et l'encombrement des circuits d'organisation des accès.

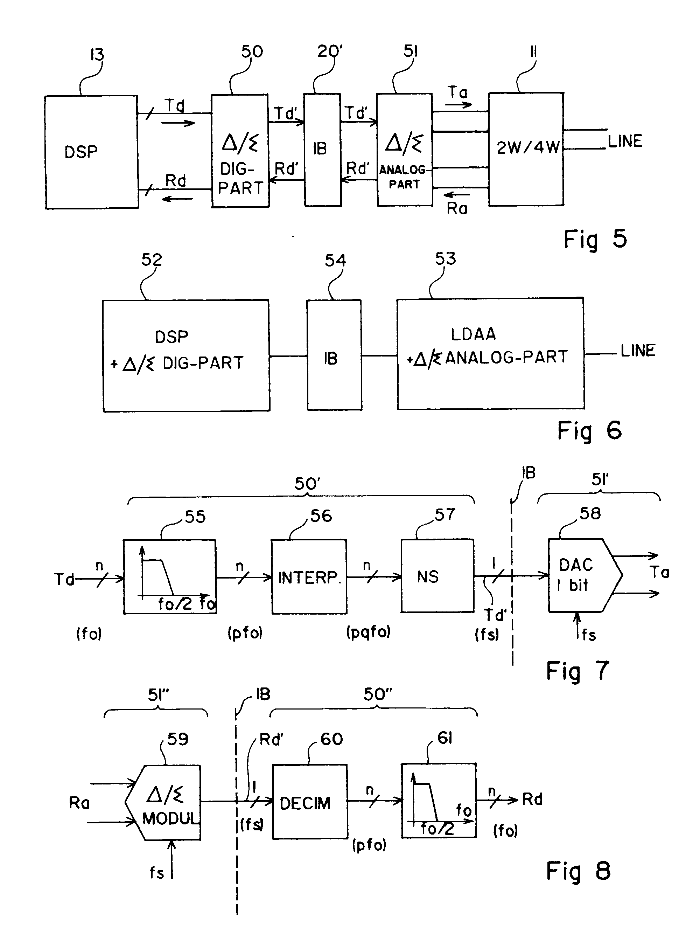

Un autre inconvénient des circuits connus, quels que soient les moyens d'isolement utilisés, est que le nombre de circuits intégrés devant être prévus sur une carte modem est important. Cet inconvénient ressort de la figure 4 qui illustre, sous forme de blocs, le nombre minimal de circuits intégrés nécessaires. La partie numérique proprement dite correspond au processeur numérique de signal 13 qui, le plus souvent, est extérieur au modem. Quatre circuits distincts sont au minimum nécessaires au sein du modem. Un premier circuit constitué par la tête analogique 12 est un circuit mixte numérique analogique. L'organisation des accès (DAA) requiert au moins trois circuits véhiculant des signaux analogiques. Un premier circuit 41 (MDAA) contient les éléments côté équipement utilisateur et, en particulier, le convertisseur 11. Un deuxième circuit 20 est constitué par la barrière d'isolement, et un troisième circuit 42 (LDAA) contient les éléments nécessaires à l'organisation des échanges, côté ligne.

La présente invention vise à proposer un nouveau concept d'organisation des échanges au sein d'un modem qui pallie aux inconvénients des systèmes connus.

La présente invention vise, en particulier, à proposer un système qui soit d'encombrement réduit, compatible avec les contraintes de miniaturisation pour une application à une carte modem pour micro-ordinateur ou à un ordinateur portable.

La présente invention vise également à accroître l'intégration possible des constituants du système en minimisant le nombre de circuits intégrés distincts nécessaires.

La présente invention vise également à proposer une solution qui, tout en étant de faible encombrement, soit de faible coût.

La présente invention vise, en outre, à rendre les caractéristiques fonctionnelles programmables de manière à les rendre adaptables en fonction des normes qui peuvent différer selon les pays.

Pour atteindre ces objets, la présente invention prévoit un dispositif d'organisation des accès entre une ligne téléphonique et des entrées-sorties numériques d'un modem, comportant des moyens d'isolement galvanique entre des parties numériques et analogiques de convertisseurs delta-sigma, et des moyens pour faire transiter des signaux supplémentaires d'information par lesdits moyens d'isolement galvanique.

Selon un mode de réalisation de la présente invention, le dispositif remporte deux moyens d'isolement unidirectionnels respectivement associés à un convertisseur Δ/Σ numérique-analogique et à un convertisseur Δ/Σ analogique-numérique.

Selon un mode de réalisation de la présente invention, le dispositif comporte : des moyens pour mélanger, à un signal numérique sur un bit issu de la partie numérique du convertisseur Δ/Σ numérique-analogique et en amont du moyen d'isolement, au moins un signal additionnel de fréquence fixe correspondant à un multiple entier de la fréquence d'échantillonnage du convertisseur Δ/Σ ; et, en aval du moyen d'isolement et en amont de la tête analogique du convertisseur Δ/Σ numérique-analogique, un moyen de détection de ce signal additionnel.

Selon un mode de réalisation de la présente invention, au moins un signal de détection, à une fréquence correspondant à un multiple entier de la fréquence d'échantillonnage du convertisseur Δ/Σ, est mélangé, en amont du moyen d'isolement, à un signal numérique sur un bit délivré par une tête analogique du convertisseur Δ/Σ analogique-numérique ; et le dispositif comporte, en aval du moyen d'isolement, un moyen de détection de ce signal.

Selon un mode de réalisation de la présente invention, lesdits signaux d'information supplémentaires comprennent en outre des signaux numériques à très basse fréquence.

Selon un mode de réalisation de la présente invention, un duplexeur est intercalé entre les parties analogiques des convertisseurs Δ/Σ et la ligne.

Selon un mode de réalisation de la présente invention, les moyens d'isolement sont constitués d'optocoupleurs unidirectionnels.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 4 décrites précédemment sont destinées à exposer l'état de la technique et le problème posé ;
la figure 5 représente, sous forme de schéma-bloc, un mode de réalisation d'un dispositif d'organisation des accès entre une ligne téléphonique et les entrées/sorties numériques d'un modem selon la présente invention ;
la figure 6 illustre, de façon très schématique, la répartition des différents constituants d'un dispositif selon la présente invention dans différents circuits intégrés distincts ;
la figure 7 représente un exemple de réalisation d'un convertisseur delta-sigma numérique-analogique ;
la figure 8 représente un exemple de réalisation d'un convertisseur delta-sigma analogique-numérique ; et
la figure 9 représente, sous forme de schéma-bloc, un mode de réalisation d'un dispositif selon la présente invention reprenant les fonctions d'un système d'organisation des accès tel que représenté à la figure 3.

Les mêmes éléments ont été désignés par les mêmes références aux différentes figures. Pour des raisons de clarté, seul les éléments nécessaires à la compréhension de l'invention ont été représentés aux figures et seront décrits par la suite.

Une caractéristique de la présente invention est de réaliser l'isolement, entre une ligne téléphonique et un équipement utilisateur, sur les signaux numériques et non plus sur les signaux analogiques.

La figure 5 représente, de façon très schématique, un mode de réalisation d'un dispositif d'organisation des accès entre une ligne téléphonique (LINE) et des entrées/sorties (Td/Rd) numériques d'un modem selon la présente invention.

Comme précédemment les signaux Td et Rd sont échangés entre un processeur numérique de signal 13 (DSP) et le modem.

Les conversions numérique-analogique et analogique-numérique sont, selon l'invention, effectuées au moyen de convertisseurs réalisant les conversions proprement dites sur un seul bit. Il s'agit, par exemple, de convertisseur dit "delta-sigma" (Δ/Σ). Un convertisseur Δ/Σ numérique-analogique comporte une partie numérique de filtrage et de mise en forme des mots (Td) de données en un signal numérique (Td') sur un seul bit. Ce signal Td' est alors traité par une partie analogique du convertisseur délivrant un signal analogique différentiel Ta à transmettre. Le niveau d'un échantillon courant est déterminé en incrémentant, ou en décrémentant, le niveau de l'échantillon précédent en fonction de l'état du bit unique. Un convertisseur Δ/Σ analogique-numérique comprend également une partie analogique et une partie numérique, et réalise la fonction inverse du convertisseur Δ/Σ numérique-analogique. La partie analogique convertit un signal analogique différentiel Ra en un signal numérique Rd' sur un seul bit. La partie numérique convertit ce bit unique en mots de données Rd sur plusieurs bits.

Les entrées-sorties numériques du modem représenté à la figure 5 sont constituées par les entrées-sorties des parties numériques 50 des convertisseurs (Δ/Σ DIG_PART). Selon la présente invention, une barrière d'isolement 20' est intercalée entre les parties numériques 50 et les parties analogiques 51 (Δ/Σ ANALOG_PART) des convertisseurs Δ/Σ. Ainsi, selon la présente invention, les parties numériques des convertisseurs Δ/Σ sont référencées côté équipement utilisateur, tandis que les parties analogiques de ces convertisseurs sont référencées côté ligne.

Une autre caractéristique de la présente invention est que le convertisseur 11 (2W/4W) constituant un duplexeur des signaux analogiques est référencé par rapport à la ligne.

Les têtes analogiques 51 des convertisseurs Δ/Σ et le circuit 11 sont donc alimentés par la tension continue de la ligne téléphonique (généralement -48 volts).

Un avantage de la présente invention est que, comme la barrière d'isolement 20' est située sur des liaisons unidirectionnelles de données, de simples optocoupleurs classiques peuvent être utilisés. Ainsi, la barrière d'isolement 20' est, selon l'invention, suffisamment peu encombrante pour respecter les contraintes de miniaturisation des cartes modem pour micro-ordinateurs ou pour ordinateurs portables.

Un autre avantage de la présente invention est que, comme l'isolement s'effectue sur des signaux numériques, la linéarité des optocoupleurs n'est plus un problème. Par conséquent, il n'est pas nécessaire d'avoir recours à des optocoupleurs complexes et coûteux prévoyant un optotransistor de réaction.

Un autre avantage de la présente invention est qu'elle optimise les possibilités d'intégration du dispositif en réduisant le nombre de circuits intégrés séparés nécessaires à sa réalisation.

Cet avantage est illustré par la figure 6 qui représente, de façon très schématique, la répartition possible des constituants d'un dispositif selon la présente invention sous forme de circuits intégrés.

Un premier circuit intégré 52 peut regrouper le processeur numérique de signal 13 et les parties numériques des convertisseurs Δ/Σ. Ce circuit ne traite que des signaux numériques. Un deuxième circuit 53 peut regrouper toute la partie du dispositif d'organisation des accès, côté ligne, y compris le circuit de duplexage 11 et les têtes analogiques des convertisseurs Δ/Σ. Ce circuit 53 regroupe le traitement de tous les signaux analogiques. Un troisième circuit 54 contient les optocoupleurs constituant la barrière d'isolement. Ainsi, un dispositif selon l'invention peut ne comporter que trois circuits intégrés au lieu de cinq dans un dispositif classique (figure 4).

On notera qu'une telle répartition permet d'utiliser des procédés de fabrication à très haute intégration pour les parties numériques qui sont, selon l'invention, maximisées.

La figure 7 représente, schématiquement, un exemple de réalisation d'un convertisseur Δ/Σ numérique-analogique. La mise en oeuvre de l'invention ne requiert aucune autre modification d'un convertisseur Δ/Σ classique que celle de séparer la partie numérique 50' de la partie analogique 51' pour faire traverser la barrière d'isolement (ligne en pointillés IB) par le bit unique (Td'). Le signal Td sur n bits traverse tout d'abord un filtre demi-bande 55 centré sur la fréquence f0 des signaux Td pour éliminer la moitié du spectre fréquentiel de la bande utile. Les n sorties du filtre 55 sont à une fréquence p.f0 (p étant un entier supérieur ou égal à 2) et sont envoyées sur un filtre 56 d'interpolation (INTERP.) qui constitue un filtre à réponse impulsionnelle finie présentant des zéros à chaque multiple de la fréquence f0 des échantillons à convertir. Les sorties du filtre 56 sont à une fréquence fs = p.q.f0 (q étant un entier) et sont envoyées sur un circuit 57 de mise en forme de bruit (NS) dont le rôle est de repousser le bruit de quantification hors de la bande utile. Le produit p.q est généralement supérieur ou égal à 64. Le circuit 57 réalise un sur-échantillonnage et délivre le signal Td' sur un seul bit à la fréquence fs de sur-échantillonnage. Le signal Td' est envoyé (après avoir traversé la barrière d'isolement IB) sur un convertisseur 58 (DAC) numérique-analogique 1 bit travaillant à la fréquence de sur-échantillonnage fs et délivrant le signal Ta.

La figure 8 représente, schématiquement, un exemple de convertisseur Δ/Σ analogique-numérique classique. Le signal analogique Ra traverse un modulateur 59 (Δ/Σ MODUL) qui délivre des sur-échantillons numériques à la fréquence fs. Ces sur-échantillons constituent le signal Rd' sur un seul bit. Ce signal est envoyé sur un décimateur numérique 60 dont le rôle est de ramener les échantillons à la fréquence p.f0. Le décimateur constitue également un filtre à réponse impulsionnelle finie comportant des zéros à chaque multiple de la fréquence f0. Les sorties du décimateur 60 traversent un filtre demi-bande 61 qui délivre les signaux Rd sur n bits à la fréquence f0.

La structure et le fonctionnement des convertisseurs Δ/Σ sont parfaitement connus et ne seront pas plus détaillés.

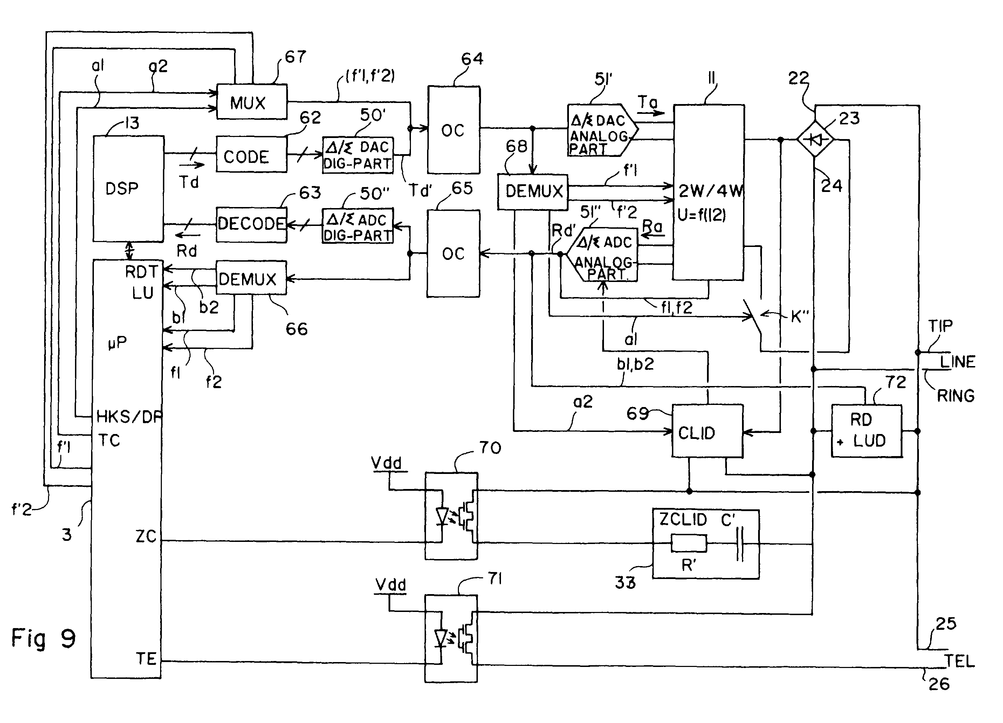

La figure 9 représente, sous forme de schémas-bloc, un mode de réalisation des accès entre une ligne téléphonique et des entrées-sorties numériques d'un modem selon la présente invention, reprenant les fonctions d'échange d'informations entre un microprocesseur et la partie analogique du modem telles que prévues à la figure 3 précédemment décrite.

Les conducteurs TIP et RING de la ligne sont reliés aux bornes 22 et 24 d'entrées alternatives du pont redresseur 23. La sortie positive du pont redresseur 23 est reliée à une des deux voies de sortie du circuit 11 tandis que la sortie négative du pont 23 est reliée, par l'intermédiaire d'un commutateur K", à la deuxième voie de sortie du circuit 11.

Selon l'invention, les signaux Td émis par le processeur numérique 13 traversent un circuit 62 de codage (CODE) avant d'arriver sur la partie numérique 50' du convertisseur numérique-analogique. Le codage réalisé est un codage connu sous la dénomination de codage "MANCHESTER" qui consiste essentiellement à doubler la fréquence des échantillons afin qu'ils contiennent l'horloge des bits transmis. Un tel codage est nécessaire pour faire passer l'horloge, côté ligne, à la tête analogique 51' du convertisseur numérique-analogique. Cela évite le recours à un optocoupleur supplémentaire pour faire passer cette horloge séparément.

Côté réception, la partie numérique 50" du convertisseur analogique-numérique est suivie par un décodeur 63 (DECODE) "MANCHESTER" qui délivre les signaux Rd après en avoir éliminé l'horloge. On pourra utiliser d'autres modes de codage pourvu qu'ils permettent d'extraire, côté ligne, l'horloge des bits et que le signal ait une valeur moyenne nulle. Par exemple, on pourra remplacer le codage "MANCHESTER" par un codage à trois niveaux.

Les fonctions additionnelles (détecteur de sonnerie, détecteur de ligne utilisée par un poste téléphonique) pourront utiliser, côté ligne, des circuits classiques associés à des moyens d'isolement individualisés comme dans les circuits connus.

Toutefois, on préférera, selon la présente invention, tirer profit de l'utilisation des convertisseurs Δ/Σ et de la réalisation de l'isolement côté numérique pour faire transiter, dans des optocoupleurs 64 et 65 constituant la barrière d'isolement des données, également des informations permettant de mettre en oeuvre certaines de ces fonctions supplémentaires. Les signaux supplémentaires utilisés selon la présente invention permettent de programmer la partie analogique du modem et de recevoir, par la barrière d'isolement faisant transiter les données, des informations d'état détectées par la partie analogique.

Deux familles de signaux supplémentaires peuvent être utilisées selon la présente invention.

Une première famille comprend des signaux a1, a2, b1, b2 qui constituent des signaux numériques à très basse fréquence. Il s'agit, en pratique, de signaux de commande (a1, a2) ou de détection (b1, b2) utilisés hors des périodes de transmissions de données. Ces signaux ne risquent donc pas de polluer les données traversant les convertisseurs Δ/Σ pendant une communication.

Ainsi, un circuit 72 de détection de sonnerie et de ligne utilisée est placé entre les conducteurs TIP et RING, et génère deux signaux b1, b2. Ces deux signaux proviennent de l'arrivée d'un appel entrant et de l'état de la boucle de ligne. Les signaux b1 et b2 sont générés alors que l'équipement utilisateur est au repos et le circuit 72 ne consomme qu'un très faible courant (inférieur à 10 µA). Les signaux b1 et b2 traversent l'optocoupleur de réception 65 (la partie analogique 51" du convertisseur de réception étant en veille). La sortie du coupleur 65 est envoyée, non seulement sur la partie numérique 50" du convertisseur analogique-numérique, mais également sur un démultiplexeur 66 dont un des rôles est de détecter les signaux b1 et b2. Ainsi, le démultiplexeur 66 délivre, sur des bornes RDT et LU du microprocesseur 3', les signaux b1, b2 indicateurs de la présence d'un signal de sonnerie ou d'une occupation de la ligne par le poste téléphonique.

Une borne HKS/DP du microprocesseur 3' délivre un signal al de commande de prise de ligne et de numérotation décimale à destination du commutateur K" de la partie analogique. Ce signal al traverse un multiplexeur 67 recevant un autre signal a2 de commande délivré par une borne TC du microprocesseur 3'. La sortie du multiplexeur 67 est mélangée avec le signal Td' pour traverser l'optocoupleur d'émission 64. La sortie de l'optocoupleur 64 est relié, non seulement à la tête analogique 51' du convertisseur numérique-analogique, mais également à un démultiplexeur 68 dont le rôle est de détecter les signaux a1 et a2 et de les isoler pour les envoyer individuellement aux circuits qu'ils sont chargés de commander.

Le signal a2 sert à commander (allumer, éteindre) une fonction CLID (circuit 69) d'identification de l'appelant avant prise de ligne, en réception d'un appel, en mettant en fonctionnement le convertisseur Δ/Σ de réception. Le circuit 69 identifie, après un premier train de sonnerie, le nom et le numéro de l'appelant (et l'heure de l'appel) et les transmet à la tête analogique 51" du convertisseur de réception. Le circuit 69 est placé entre les conducteurs TIP et RING et comprend également une entrée reliée à la sortie positive du pont 22. Le circuit 69 consomme peu et remplace temporairement le circuit 11 avant l'établissement de la communication.

De préférence, un circuit classique 33 (ZCLID), constitué d'un réseau R'C', reste associé à un moyen d'isolement séparé, ici un optocoupleur 70, pour fixer l'impédance de la ligne. Le circuit 33 est actionné par un signal ZC émis par le microprocesseur 3', en même temps que le circuit 69 est actionné par le signal a2.

Dans le mode de réalisation représenté à la figure 9, le dispositif d'organisation des accès remporte une fonction supplémentaire permettant au modem de transférer des signaux vocaux, par exemple, si le micro-ordinateur auquel il est raccordé est pourvu d'une carte audio pour permettre une transmission de la parole.

Dans ce cas, le circuit 11 doit pouvoir s'adapter soit à la transmission de données, soit à la transmission de la voix, soit à la transmission simultanée de la voix et de données.

Pour ce faire, on utilise, selon l'invention, une deuxième famille de signaux f1, f2, f'1, f'2 ayant des fréquences fixes et servant à programmer le circuit 11 et qui doivent transiter par les optocoupleurs 64 et 65 pendant la communication, donc en même temps que les données.

Selon l'invention, on utilise des fréquences multiples (entiers) de la fréquence (f0) d'échantillonnage des données numériques utilisée par les convertisseurs Δ/Σ, pour coder ces informations supplémentaires. Dans le sens analogique numérique, (ligne téléphonique vers équipement utilisateur), ces fréquences fl, f2 correspondent à des fréquences totalement exclues (zéros) de la réponse fréquentielle des filtres de décimation à réponse impulsionnelle finie (60, figure 8) de sorte que les informations supplémentaires ne polluent pas les données. Dans le sens numérique-analogique, ces fréquences f'1, f'2 sont situées entre la bande utile et la répartition, autour de la fréquence fs/2, du bruit de quantification.

Les fréquences f'1 et f'2 sont utilisées pour programmer le circuit 11 aux différents modes de transmissions. Les principales programmations du circuit 11 s'effectuent sur les gains en émission et en réception, la compensation de l'atténuation du signal due à la longueur de la ligne téléphonique afin d'améliorer la transmission de la voix, l'impédance analogique que doit présenter le circuit 11 afin de s'adapter aux normes qui diffèrent selon les pays.

Les fréquences f'1 et f'2 sont délivrées par le microprocesseur 3' et traversent le multiplexeur 67 pour être mélangées au signal Td'. Côté ligne, le démultiplexeur 68 détecte les fréquences f'1 et f'2 et les isole pour les envoyer individuellement au circuit 11 qu'elles sont chargées de programmer. En pratique, les fréquences f'1 et f'2 seront, de préférence, mélangées à l'intérieur de la partie numérique 50', plus précisément, aux sur-échantillons numériques délivrés par le filtre d'interpolation (56, figure 7). Le nombre de bits de données auxquels les fréquences (générées sous forme numérique) sont mélangées dépend de l'amplitude souhaitée pour ces signaux f'1 et f'2.

La compensation de la longueur de ligne nécessite la connaissance de celle-ci. L'information utilisée est le courant de ligne I_{L} qui parcourt le circuit 11. La valeur du courant I_{L} est convertie dans le circuit 11 en fréquences f1 et f2. Ces fréquences correspondent à des multiples entiers de la fréquence f0. Ces deux fréquences délivrées par le circuit 11 sont mélangées avec le signal Rd' en sortie de la tête analogique 51" du convertisseur analogique-numérique et traversent l'optocoupleur de réception 65. En pratique, les signaux f1 et f2 seront, de préférence, mélangés dans la tête 51", plus précisément, en amont du modulateur (59, figure 8) et seront donc générés sous la forme de signaux analogiques. Le démultiplexeur 66 détecte les fréquences f1 et f2 et délivre les deux signaux au microprocesseur 3' pour analyse.

On notera que les fréquences f'1 et f'2 peuvent correspondre aux fréquences f1 et f2 dans la mesure où les signaux d'information correspondants ne se mélangent pas dans le dispositif. Ces fréquences seront cependant choisies pour être très nettement inférieures à la fréquence de sur-échantillonnage fs des convertisseurs delta-sigma. Cette condition est parfaitement compatible avec les rapports classiques (généralement entre 96 et 256) entre la fréquence f0 et la fréquence fs des convertisseurs utilisés dans les modems. Ainsi, les fréquences de transmission des informations supplémentaires sont situées hors de la bande utile des données et hors de la bande de bruit de quantification repoussée par les convertisseurs.

Un optocoupleur supplémentaire 71 est prévu pour affecter, par un signal de commande TE du microprocesseur 3', la ligne au poste téléphonique externe. Cet optocoupleur 71 remplit une des fonctions du relais 27 du circuit classique de la figure 3.

Un avantage de la présente invention est qu'elle réduit considérablement l'encombrement d'un dispositif d'organisation des accès entre une ligne téléphonique et des entrées-sorties numériques d'un modem.

Un autre avantage de la présente invention est qu'en permettant de transférer des signaux d'informations superposés aux données à l'intérieur du modem, il est désormais possible d'adjoindre d'autres fonctions au modem sans qu'il soit nécessaire de prévoir de barrière d'isolement supplémentaire.

Un autre avantage de la présente invention est que, grâce aux signaux supplémentaires pouvant être transmis à l'intérieur du modem, le dispositif proposé est programmable par le micro-ordinateur auquel il est par exemple associé. Cela permet de réaliser un dispositif type, utilisable quelles que soient les normes de télécommunications.

Bien entendu, la présente invention est susceptible de diverses variantes et modifications qui apparaîtront à l'homme de l'art. En particulier, si le recours à des optocoupleurs unidirectionnels classiques constitue un mode de réalisation préféré de la présente invention, on pourra toutefois utiliser tous types de moyens d'isolement classiques. De plus, les références au microprocesseur et au circuit numérique de traitement des signaux pour l'exploitation des signaux de données et des signaux d'informations supplémentaires pourront être modifiées en fonction des traitements respectifs réalisés par ces circuits.

## Revendications

1. Dispositif d'organisation des accès entre une ligne téléphonique (LINE) et des entrées-sorties numériques (Td, Rd) d'un modem, comportant des moyens (20", 64, 65) d'isolement galvanique entre des parties numériques (50, 50', 50") et analogiques (51, 51', 51") de convertisseurs delta-sigma, caractérisé en ce qu'il comporte des moyens pour faire transiter, par lesdits moyens d'isolement galvanique, des signaux supplémentaires d'information (a1, b1, a2, b2, f1, f2, f'1, f'2).

2. Dispositif selon la revendication 1, caractérisé en ce qu'il comporte deux moyens d'isolement (64, 65) unidirectionnels respectivement associés à un convertisseur Δ/Σ numérique-analogique (50', 51') et à un convertisseur Δ/Σ analogique-numérique (50", 51").

3. Dispositif selon la revendication 2, caractérisé en ce qu'il comporte :
des moyens pour mélanger, à un signal numérique sur un bit (Td') issu de la partie numérique (50') du convertisseur Δ/Σ numérique-analogique et en amont du moyen d'isolement (64), au moins un signal additionnel de fréquence fixe (f1, f2) correspondant à un multiple entier de la fréquence d'échantillonnage (f0) du convertisseur Δ/Σ ; et
en aval du moyen d'isolement et en amont de la tête analogique (50") du convertisseur Δ/Σ numérique-analogique, un moyen (68) de détection de ce signal additionnel.

4. Dispositif selon la revendication 2 ou 3, caractérisé en ce qu'au moins un signal de détection à une fréquence fixe (f'1, f'2), correspondant à un multiple entier de la fréquence d'échantillonnage (f0) du convertisseur Δ/Σ, est mélangé, en amont du moyen d'isolement (65), à un signal numérique sur un bit (Rd') délivré par une tête analogique (51") du convertisseur Δ/Σ analogique-numérique ; et
en ce qu'il comporte, en aval du moyen d'isolement, un moyen (66) de détection de ce signal.

5. Dispositif selon l'une quelconque des revendications 1 à 4, caractérisé en ce que lesdits signaux d'information supplémentaires comprennent en outre des signaux numériques (a1, a2, b1, b2) à très basse fréquence.

6. Dispositif selon l'une quelconque des revendications 1 à 5, caractérisé en ce qu'un duplexeur (11) est intercalé entre les parties analogiques (51', 51") des convertisseurs Δ/Σ et la ligne (LINE).

7. Dispositif selon l'une quelconque des revendications 1 à 6, caractérisé en ce que les moyens d'isolement (64, 65) sont constitués d'optocoupleurs unidirectionnels.
